# FASCICULE DE BREVET EUROPEEN

(11) **EP 1 021 090 B1**
(45) Date de publication et mention de la délivrance du brevet: **10.04.2002**
(21) Numéro de dépôt: 96939133.3
(22) Date de dépôt: 18.11.1996
(51) Int. Cl.: A01N 59/06

(54) **UTILISATION DU CHLORURE D'ALUMINIUM COMME AGENT ELICITEUR DE LA SYNTHESE DU RESVERATROL**
VERWENDUNG VON ALUMINIUMCHLORID ALS STIMULIERUNGSMITTEL FÜR DIE RESVERATROLSYNTHESE
USE OF ALUMINIUM CHLORIDE AS A RESVERATROL SYNTHESIS ELICITOR

(30) Priorité: 17.11.1995 FR 9513642
(43) Date de publication de la demande: 26.07.2000
(73) Titulaire: LABORATOIRES GOEMAR S.A., 35413 Saint-Malo (FR)
(72) Inventeur: JEANDET, Philippe, F-21121 Fontaine-les-Dijon (FR); BESSIS, Roger, F-21000 Dijon (FR); ADRIAN, Marielle, F-21000 Dijon (FR); YVIN, Jean-Claude, F-35400 Saint-Malo (FR); JOUBERT, Jean-Marie, F-35400 Saint-Malo (FR)
(74) Mandataire: Hubert, Philippe
(86) Numéro de dépôt international: FR9601813
(87) Numéro de publication internationale: WO9718715

(56) Documents cités:
- FR-A- 2 414 301
- FR-A- 2 576 749
- US-A- 5 043 005
- PHYTOCHEMISTRY, vol. 31, no. 9, 1992, GB, pages 3005-3007, XP000578804 F.HANAWA ET AL.: "antifungal stress compounds from veratrum grandiflorum leaves treated with cupric chloride"
- PLANT MOLECULAR BIOLOGY, vol. 3, 1984, pages 45-48, XP000578654 E.CZARNECKA ET AL.: "Comparative analysis of physical stress responses in soybean seedlings using cloned heat shock cDNAs"
- BIOLOGICAL ABSTRACTS, vol. 86, Philadelphia, PA, US; abstract no. 31344, S.L.F.MEYER ET AL.: "A COMPARISON OF THE DEATH INDUCED BY FUNGAL INVASION OR TOXIC CHEMICALS IN COWPEA EPIDERMAL CELLS I. CELL DEATH INDUCED BY HEAVY METAL SALTS." XP002010533 & CAN J BOT, vol. 66, no. 4, 1988, pages 613-623,
- BIOLOGICAL ABSTRACTS, vol. 75, Philadelphia, PA, US; abstract no. 67572, K.RODECAP ET AL.: "STRESS ETHYLENE A BIOASSAY FOR RHIZOSPHERE APPLIED PHYTO TOXICANTS" XP002010534 & ENVIRON MONIT ASSESS, vol. 1, no. 2, 1981, pages 119-128,
- BIOCHEMICAL SOCIETY TRANSACTIONS, vol. 16, no. 1, 1988, LONDON, GB, pages 71-75, XP000579075 D.R.THRELFALL ET AL.: "The use of biotic and abiotic elicitors to induce the formation of secondary plant products in cell suspension cultures of solanaceous plants"
- ENVIRONMENTAL AND EXPERIMENTAL BOTANY, vol. 34, no. 3, 1994, GB, pages 329-336, XP000578809 M.L.SERRANO ET AL.: "ALUMINIUM-MEDIATED FOSETYL-AL EFFECTS ON PEROXIDASE SECRETED FROM GRAPEVINE CELLS"
- STN-International, File CROPU, STN accession no. 89-80089, W.DERCKS et al. 'Importance of Stilbene Phytoalexins in the Host -Parasite- XP002010532 & MITT.BIOL.BUNDESANST.LANDFORSTWIRTSCH., no. 245, 1988, page 329
- CHEMICAL ABSTRACTS, vol. 102, no. 11, 18 Mars 1985 Columbus, Ohio, US; abstract no. 91276, U.STEIN ET AL.: "Methods for induction and determination of stilbenes in Vitaceae" XP002010535 & VITIS, vol. 23, no. 3, 1984, pages 179-194,

## Description

La présente invention a pour objet l'utilisation du chlorure d'aluminium comme agent éliciteur de la synthèse du resvératrol dans les vignes, dans le but d'augmenter la teneur en resvératrol des produits à usage alimentaire, tels que le raisin, le jus de raisin et le vin provenant de la vigne.

On sait que certaines plantes, comme en particulier la vigne, peuvent synthétiser, en réponse à un stress tel qu'une irradiation par les rayons ultra-violets ou une infection parasitaire, des molécules naturelles leur permettant de s'adapter à ce stress. L'un des constituants principaux de ces molécules naturelles est le resvératrol (trans-3,5,4'-trihydroxystilbène).

Le document PHYTOCHEMISTRY, vol. 31, No. 9, pages 3005-3007 révèle également que le resvératrol peut être produit par les plantes en réponse à un stress provoqué par un métal lourd, comme notamment par l'action du cuivre après blessure du végétal. Dans ce cas, la synthèse du resvératrol résulte de la pénétration du cuivre dans le végétal par suite de la blessure préalablement imposée à celui-ci.

On sait aussi que le resvératrol présente des propriétés pharmacologiques particulièrement intéressantes, notamment utilisables dans la prévention ou le traitement de certaines maladies humaines.

Ainsi, cette molécule qui peut être également extraite des racines de Polygonum cuspidatum est utilisée notamment en médecine populaire traditionnelle chinoise et japonaise dans le traitement des hyperlipémies, de l'arthériosclérose, des maladies inflammatoires et allergiques.

Diverses études ont en effet montré que le resvératrol diminue l'agrégabilité plaquettaire et exerce un effet protecteur vis-à-vis de l'oxydation des lipoprotéines plasmatiques, ces deux derniers facteurs étant impliqués dans les mécanismes de l'athérothrombogenèse pouvant conduire à l'infarctus du myocarde.

L'effet protecteur du resvératrol vis-à-vis de l'oxydation des lipoprotéines plasmatiques est particulièrement élevé, puisqu'il a été montré que cet effet est beaucoup plus important que celui procuré par la vitamine E (α-tocophérol) qui est considérée comme un puissant anti-oxydant naturel.

Il a également été suggéré que le resvératrol pourrait fournir une protection vis-à-vis du cancer en raison de ses propriétés anti-radicalaires vis-à-vis des radicaux libres impliqués dans les phénomènes de cancérisation cellulaire.

Compte tenu du rôle bénéfique susceptible d'être exercé par le resvératrol dans le domaine de la santé humaine, il semble intéressant de pouvoir disposer d'un moyen simple permettant d'augmenter la teneur en resvératrol de certains produits à usage alimentaire.

Il a été découvert, de façon tout à fait inattendue et surprenante que le chlorure d'aluminium est susceptible d'induire la synthèse du resvératrol dans les vignes dans le but d'augmenter la teneur en resvératrol dans leurs produits transformés.

La présente invention s'applique plus particulièrement aux produits transformés que sont le raisin, le jus de raisin et le vin.

L'expression "produit" utilisée dans le cadre de la présente invention désigne tout produit provenant naturellement de la vigne, comme notamment le fruit ainsi que tout produit résultant de traitements de transformation ultérieurs de celui-ci.

Selon une caractéristique particulière de l'utilisation conforme à l'invention, le chlorure d'aluminium est appliqué par voie foliaire et/ou par injection dans les troncs.

Avantageusement, le chlorure d'aluminium est appliqué en une quantité de 0,1 à 100 kilos et de préférence de 10 à 50 kilos par hectare de sol cultivé et par traitement.

Bien entendu, les doses actives utilisables varieront notamment en fonction des conditions climatiques et de la voie d'application choisie.

Dans le cas de la vigne, le chlorure d'aluminium sera appliqué de préférence par voie foliaire et en une quantité de 0,5 à 50 kilos et de préférence de 5 à 25 kilos par hectare et par traitement.

Le chlorure d'aluminium peut être appliqué à tout stade de la culture.

Dans le cas particulier de la vigne, il sera appliqué de préférence de la floraison à la maturité de la baie de raisin.

Avantageusement, et notamment dans tous les cas où l'on souhaite utiliser le chlorure d'alumunium sous forme de solution aqueuse, celui-ci se présentera sous forme hydratée et notamment héxahydratée.

Selon une autre caractéristique particulière, l'utilisation selon l'invention comprend la préparation d'une composition contenant une quantité efficace de chlorure d'aluminium éventuellement incorporée à un support ou véhicule acceptable en agriculture.

D'une façon générale, cette composition peut se présenter sous fonne solide, notamment de poudres en particulier mouillables ou de granulés, ou encore et de préférence, sous forme liquide, notamment sous forme de solution aqueuse.

Dans une forme de réalisation particulière, cette composition peut en outre contenir au moins une substance additionnelle choisie parmi les fongicides, les insecticides, les herbicides, les hormones de croissance, les éléments correcteurs de carence ainsi que des algues ou des extraits d'algues.

Les extraits d'algues susceptibles d'être utilisés dans le cadre de l'invention sont par exemple une crème d'algues, telle qu'obtenue par la mise en oeuvre du brevet français numéro 74 35162.

Avantageusement, une composition utilisée dans le cadre de la présente invention se présentera sous forme solide et contiendra de 0,2 à 55 % en poids de chlorure d'aluminium.

D'une façon générale, les compositions susceptibles d'être utilisées dans le cadre de l'invention, seront préparées par mélange du chlorure d'aluminium sous forme de poudre avec des additifs usuels, par exemple des charges solides et/ou des solvants.

On utilisera également, si cela est nécessaire, des substances tensioactives, des agents dispersants ou des agents émulsifiants.

En tant que charge solide pour la préparation de poudres mouillables ou de granulés, on peut utiliser par exemple du kaolin ou de l'argile finement divisé.

Lorsqu'elles se présentent sous forme liquide, ces compositions seront de préférence obtenues par dilution du chlorure d'aluminium hydraté dans de l'eau.

On peut également envisager la préparation de compositions pulvérisables à base d'huiles ou de concentrés émulsifiables, notamment dans le cas de mélanges avec des substances additionnelles non solubles dans l'eau.

La présente invention sera mieux comprise à la lecture des exemples suivants, donnés uniquement à titre non limitatif.

Dans ces exemples, les pourcentages sont donnés en poids, sauf indications contraires.

### Exemple 1

### Mise en évidence des propriétés du chlorure d'aluminium

Pour mettre en évidence les propriétés du chlorure d'aluminium vis-à-vis de la synthèse du resvératrol, diverses expériences ont été réalisées sur la vigne.

Plus précisément, des extrémités de rameaux de sept mois, issus de boutures cultivées en serres, et comprenant sept entrenoeuds jusqu'à l'apex, ont été plongés dans des solutions aqueuses à différentes concentrations en chlorure d'aluminium pendant des temps prédéterminés et sous obscurité.

La présence de resvératrol peut être observée sous ultra-violets à 366 nm, le resvératrol émettant une fluorescence bleue pâle dans ces conditions.

On a ensuite déterminé la quantité de resvératrol produit dans les feuilles.

A cet effet, les feuilles ont été prélevées et broyées dans du méthanol à 80 %.

Le broyât de feuilles ainsi obtenu est filtré sur verre fritté n° 4.

Le filtrat est ensuite récupéré et passé sur une colonne de type seppack de 1 centimètre de longueur.

Le filtrat ainsi obtenu est évaporé sous vide à +40 °C et le résidu obtenu est dilué dans 20 millilitres de méthanol à 95% par gramme de poids frais de l'échantillon.

La solution est ensuite placée au congélateur à -20°C.

Toutes ces manipulations ont été réalisées à l'abri de la lumière.

La quantité de resvératrol extraite est quantifiée par chromatographie.

Le système de chromatographie se compose d'un contrôleur de gradient quaternaire, d'un injecteur automatique, d'un spectrofluorimètre et d'un détecteur UV visible à barrettes de diodes.

On réalise une chromatographie sur une colonne C18 (25 cm x 4.6 mm granulométrie : 4 µm).

La phase stationnaire (silice greffée) retient alors les molécules organiques.

Pour ces analyses, une solution d'acétronitrile (40 %) et d'eau ultra-pure (60 %) avec un débit de 0,6 ml/mn a été utilisé.

Le resvératrol est détecté simultanément en spectrophotométrie U.V. à 307 nm et en fluorimétrie (exitation 340 nm et émission à 374 nm).

Afin d'étalonner le chromatographe, on a réalisé une courbe de calibration en injectant plusieurs solutions de resvératrol de synthèse à différentes concentrations (10 ng - 20 ng - 50ng - 100 ng - 200 ng).

La droite obtenue présente un excellent coefficient de corrélation R₂ = 0,9950.

Les résultats obtenus exprimés en microgrammes de resvératrol par gramme d'extrait sont reportés dans les tableaux 1 à 5 ci-après.

Dans chaque tableau sont reportés les résultats de tests réalisés sur deux espèces de vigne, à savoir *Vitis Rupestris* et *Vitis Vinifera.*

Les résultats reportés au Tableau 1 ont été obtenus après neuf heures de trempage dans la solution de chlorure d'aluminium, tandis que les résultats reportés aux Tableaux 2, 3, 4, 5 ont été obtenus respectivement pour des durées de trempage de 15 heures 15, 17 heures 30, 22 heures et 26 heures.

Ces résultats illustrent clairement le pouvoir éliciteur du chlorure d'aluminium vis-à-vis de la synthèse du resvératrol dans la vigne, l'effet observé étant particulièrement intense vis-à-vis de l'espèce Vitis Rupestris.

Ces résultats permettent également de prévoir l'effet éliciteur du chlorure d'aluminium vis-à-vis de la synthèse du resvératrol dans le raisin et le vin, puisqu'il existe une corrélation entre la production du resvératrol dans les feuilles et dans les grappes de raisin.

Il a en particulier été montré que les raisins (et en particulier la pellicule du raisin) produisent du resvératrol et qu'il existe une relation étroite entre la production de resvératrol dans les feuilles et dans les grappes tout au long du cycle végétatif de la vigne.

**TABLEAU I**

| | **QUANTITE DE RESVERATROL EXPRIMEE EN µg/g DE L'EXTRAIT FRAIS DE :** | |
|---|---|---|
| **Concentration AlCl**_{**3**} **en %** | ***V*. *rupestris*** | ***V. vinifera*** |
| Tem. | 0,454 | 0,80 |
| 0,6 | 61,51 | 1,60 |
| 0,8 | 118,474 | 113,70 |
| 1 | 217,604 | 1,94 |
| 1,5 | | 52,80 |
| 2 | 57,64 | 88,46 |
| 3 | 122,52 | 69,70 |
| 4 | 88,86 | 101,30 |

**TABLEAU II**

| | **QUANTITE DE RESVERATROL EXPRIMEE EN µg/g DE L'EXTRAIT FRAIS DE :** | |
|---|---|---|
| **Concentration AlCl**_{**3**} **en %** | ***V. rupestris*** | ***V. vinifera*** |
| Tem. | 0,06 | 0,06 |
| 0,3 | 177,34 | 0,06 |
| 0,4 | 173,72 | 6,46 |
| 0,6 | 350,26 | 70,9 |
| 0,8 | 279,84 | 119,47 |
| 1 | 143,39 | 175,17 |
| 1,5 | 222,03 | 94,01 |
| 2 | 246,54 | 111,96 |
| 3 | 112,67 | 136,12 |
| 4 | | 95,48 |

**TABLEAU III**

| | **QUANTITE DE RESVERATROL EXPRIMEE EN µg/g DE L'EXTRAIT FRAIS DE :** | |
|---|---|---|
| **Concentration AlCl**_{**3**} **en %** | ***V. rupestris*** | ***V. vinifera*** |
| Tem. | 0,06 | 0,06 |
| 0,3 | 120,9 | 2,02 |
| 0,4 | 236,6 | 3,01 |
| 0,6 | 88,67 | 19,17 |
| 0,8 | 275,91 | 32,04 |
| 1 | 298,13 | 79,51 |
| 1,5 | 106,64 | 121,396 |
| 2 | 292,88 | 92,58 |
| 3 | 344,45 | 98,76 |
| 4 | 116,76 | 171,39 |

**TABLEAU IV**

| | **QUANTITE DE RESVERATROL EXPRIMEE EN µg/g DE L'EXTRAIT FRAIS DE :** | |
|---|---|---|
| **Concentration AlCl**_{**3**} **en %** | ***V. rupestris*** | ***V. vinifera*** |
| Tem. | 0,06 | 0,06 |
| 0,3 | 0,1 | 0,1 |
| 0,4 | 426,63 | 97,67 |
| 0,6 | 37,93 | 47,03 |
| 0,8 | 35,51 | 88,25 |
| 1 | 133,22 | 62,4 |
| 1,5 | 251,1 | 149,14 |
| 2 | | 150,33 |
| 3 | | 184,02 |
| 4 | 199,21 | 174,25 |

**TABLEAU V**

| | **QUANTITE DE RESVERATROL EXPRIMEE EN µg/g DE L'EXTRAIT FRAIS DE:** | |
|---|---|---|
| **Concentration AlCl**_{**3**} **en %** | ***V. rupestris*** | ***V. vinifera*** |
| Tem. | 0,06 | 0,06 |
| 0,6 | 208,11 | 0,10 |
| 0,8 | 547,43 | 188,78 |
| 1 | 138,15 | 47,60 |
| 1,5 | | 188,61 |
| 2 | 41,02 | |
| 3 | 383,00 | |

### Exemple 2

On trouvera ci-après trois exemples de compositions à base de chlorure d'aluminium (sous forme solide ou liquide), susceptibles d'être utilisées dans le cadre de l'invention.

### Composition N° 1

Pour 1 Kg de poudre :
- AlCl₃, 6H₂O 0,800
- Kaolin 0,200

### Composition N°2

Pour 1 Kg de solution :
- AlCl₃, 6H₂O 0,400
- Extrait d'algues brunes 0,250
   (crème d'algue)
- Eau 0,350

### Composition N° 3

Pour 1 litre de solution :
- AlCl₃, 6H₂O 0,400
- Huile minérale 0,200
- Kidan® (iprodione)
   Rhône Poulenc 0,200
- Eau 0,200

## Revendications

1. Utilisation du chlorure d'aluminium comme agent éliciteur de la synthèse du resvératrol dans les vignes dans le but d'augmenter la teneur en resvératrol des produits à usage alimentaire provenant de la vigne.

2. Utilisation selon la revendication 1, **caractérisée en ce que** le chlorure d'aluminium est appliqué par voie foliaire et/ou par injection dans les troncs.

3. Utilisation selon la revendication 1 ou 2, **caractérisée en ce que** le chlorure d'aluminium est appliqué en une quantité de 0,1 à 100 kilos par hectare de sol cultivé et par traitement.

4. Utilisation selon l'une des revendications 1 à 3, **caractérisée en ce que** le chlorure d'aluminium précité est hexahydraté.

5. Utilisation selon l'une des revendications 1 à 4, **caractérisée en ce qu'**elle comprend la préparation d'une composition contenant une quantité efficace de chlorure d'aluminium éventuellement incorporée à un support ou véhicule acceptable en agriculture.

6. Utilisation selon la revendication 5, **caractérisée en ce que** la composition précitée se présente sous forme solide, notamment de poudres ou de granulés ou sous forme liquide, notamment sous forme de solution aqueuse.

7. Utilisation selon la revendication 5 ou 6, **caractérisée en ce que** la composition précitée contient en outre au moins une substance additionnelle choisie parmi les fongicides, les insecticides, les herbicides, les hormones de croissance, les éléments correcteurs de carence ainsi que des algues ou des extraits d'algues.

8. Utilisation selon une des revendications 5 à 7, **caractérisée en ce que** la composition précitée se présente sous forme solide et contient de 0,2 à 55 % en poids de chlorure d'aluminium.

## Patentansprüche

1. Verwendung von Aluminiumchlorid als Phytoalexin für die Resveratrolsynthese in Rebanlagen zur Erhöhung des Resveratrolgehalts in Nahrungsmittelprodukten, die aus Weinreben stammen.

2. Verwendung gemäß Anspruch 1, **dadurch gekennzeichnet, daß** das Aluminiumchlorid über die Blätter und/oder durch Injektion in die Stämme verabreicht wird.

3. Verwendung gemäß Anspruch 1 oder 2, **dadurch gekennzeichnet, daß** das Aluminiumchlorid in einer Menge von 0,1 bis 100 kg pro Hektar Ackerboden und pro Behandlung verabreicht wird.

4. Verwendung gemäß einer der Ansprüche 1 bis 3, **dadurch gekennzeichnet, daß** das Aluminiumchlorid hexahydriert ist.

5. Verwendung gemäß einem der Ansprüche 1 bis 4, **dadurch gekennzeichnet, daß** sie die Herstellung einer Zusammensetzung umfaßt, die eine wirksame Menge Aluminiumchlorid enthält, gegebenenfalls inkorporiert in einen Träger oder ein Vehikel, das in der Landwirtschaft akzeptabel ist.

6. Verwendung gemäß Anspruch 5, **dadurch gekennzeichnet, daß** die Zusammensetzung in fester Form vorliegt, insbesondere als Pulver oder in Körnern, oder in flüssiger Form, insbesondere in Form einer wäßrigen Lösung.

7. Verwendung gemäß einem der Ansprüche 5 oder 6, **dadurch gekennzeichnet, daß** die Zusammensetzung außerdem mindestens eine zusätzliche Substanz enthält, die aus Fungiziden, Insektiziden, Herbiziden, Wachstumshormonen, Elementen zur Korrektur der Karenz sowie Algen oder Algenextrakten ausgewählt wird.

8. Verwendung gemäß einem der Ansprüche 5 bis 7, **dadurch gekennzeichnet, daß** die Zusammensetzung in Form eines Feststoffs vorliegt und 0,2 bis 55 Gew.% Aluminiumchlorid enthält.

## Claims

1. Use of aluminium chloride as a resveratrol synthesis elicitor in vines for increasing the resveratrol content of products for food use, originating from the vines.

2. The use according to claim 1, **characterised in that** the aluminium chloride is applied via the foliar route and/or by injection into the trunks.

3. The use according to claim 1 or 2, **characterised in that** the aluminium chloride is applied in an amount of 0.1 to 100 kg per hectare of cultivated soil and per treatment.

4. The use according to one of claims 1 to 3, **characterised in that** the above-mentioned aluminium chloride is hexahydrated.

5. The use according to one of claims 1 to 4, **characterised in that** it comprises the preparation of a composition containing an effective amount of aluminium chloride optionally incorporated with a carrier or vehicle which is acceptable in agriculture.

6. The use according to claim 5, **characterised in that** the above-mentioned composition is presented in a solid form, notably as a powder or as granules, or in liquid form, notably in the form of an aqueous solution.

7. The use according to claim 5 or 6, **characterised in that** the above-mentioned composition further contains at least one additional substance selected from the fungicides, insecticides, herbicides, growth hormones, deficiency correcting elements, as well as algae or extracts of algae.

8. The use according to one of claim 5 to 7, **characterised in that** the above-mentioned composition is presented in the form of a solid and contains from 0.2 to 55 % by weight of aluminium chloride.
